Europäisches Patentamt

European Patent Office

Office européen des brevets

(19)

(11) Numéro de publication : **0 087 366**
**B1·**

(12)

# FASCICULE DE BREVET EUROPÉEN

(45) Date de publication du fascicule du brevet :
28.05.86

(21) Numéro de dépôt : 83400347.7

(22) Date de dépôt : 18.02.83

(51) Int. Cl.⁴ : **A 01 D 17/10**

(54) **Perfectionnement aux chaînes élévatrices des chargeuses de racines ou tubercules.**

(30) Priorité : 23.02.82 FR 8202934

(43) Date de publication de la demande :
31.08.83 Bulletin 83/35

(45) Mention de la délivrance du brevet :
28.05.86 Bulletin 86/22

(84) Etats contractants désignés :
**AT BE CH DE GB IT LI LU NL SE**

(56) Documents cités :
**FR-A- 1 105 169**
**FR-A- 1 117 452**
**FR-A- 2 395 694**
**US-A- 2 296 810**
**US-A- 3 096 875**

(73) Titulaire : **HERRIAU Société Anonyme**
**82 Rue de Bonavis**
**F-59405 Cambrai (FR)**

(72) Inventeur : **Herriau, Paul**
**Rue Lucien Sampaix Priville**
**F-59405 Cambrai (FR)**

(74) Mandataire : **Lemonnier, André**
**4 Boulevard Saint-Denis**
**F-75010 Paris (FR)**

## Description

La présente invention concerne un perfectionnement aux chaînes élévatrices des chargeuses de racines ou tubercules. En fait, elle concerne plus particulièrement un perfectionnement aux chaînes élévatrices constituées par des barreaux parallèles montés sur deux chaînes latérales entraînées par des roues motrices et des galets de guidage et de renvoi, chaînes élévatrices qui sont positionnées derrière une turbine de nettoyage et de groupage. Toutefois, ce perfectionnement peut s'appliquer à toute chaîne transporteuse sur laquelle peut s'accumuler une quantité importante de terre.

En effet, dans le cas des ramasseuses-chargeuses de betteraves comportant une turbine de groupage, la terre entraînée avec les tubercules ou autres racines ou adhérant à ceux-ci est, au niveau de la turbine, projetée vers l'extérieur sous l'effet de la force centrifuge qui s'exerce du fait de la rotation de la turbine et une partie non négligeable de terre retombe sur la partie de la chaîne élévatrice positionnée en dessous de la partie arrière de la turbine. Si une partie de cette terre s'élimine naturellement en passant à travers les barreaux, une autre partie non négligeable constituée le plus souvent d'un mélange de pierres et de terre est retenue sur le brin inférieur de la chaîne, est entraînée vers le galet de renvoi à l'extrémité avant de ladite chaîne et s'agglomère pour former entre les pignons de renvoi un boudin de terre qui perturbe le fonctionnement des galets, alourdit la chaîne et provoque le bourrage.

Pour remédier à ces inconvénients, on a proposé, dans le brevet français FR-A-2 395 694, une chaîne tablier à barreaux comportant des surécartements entre barreaux et des éléments oscillants articulés sur l'un des barreaux délimitant le surécartement et dont la longueur est supérieure à la largeur du surécartement pour venir prendre appui sur le barreau délimitant ce surécartement, éléments qui en retombant sous l'effet de leur poids obstruent le surécartement pendant le parcours de la trajectoire le long du brin ascendant de la chaîne et qui pendent librement sous la chaîne pour dégager le surécartement pendant la trajectoire correspondant au brin inférieur de la chaîne. Ce type de chaîne est utilisé principalement comme chaîne-tablier de la partie ramasseuse. En effet, avec ce type de chaîne, les éléments oscillants qui pendent librement sous le brin inférieur de la chaîne, sont projetés en avant par la force centrifuge au niveau des galets de renvoi inférieurs et, dans le cas d'une chargeuse positionnée derrière une turbine de groupage, les éléments oscillants risquent en étant écartés par la force centrifuge dans le changement de direction situé sous la turbine de s'entrecroiser avec les dents de ladite turbine avec comme résultat un blocage du système. De plus, au niveau des galets inférieurs les éléments oscillants risquent aussi, sous l'effet de la force centrifuge, de se repositionner à l'envers sur le brin ascendant sans recouvrir le surécartement.

La présente invention a pour but de remédier à ces inconvénients en munissant la chaîne élévatrice d'un dispositif qui permet d'éliminer le boudin de terre à l'endroit critique, à savoir dans la partie basse du brin inférieur entre les deux galets de renvoi inférieurs.

La présente invention a pour objet une chaîne transporteuse élévatrice sans fin à barreaux comportant sur sa longueur au moins un surécartement entre deux barreaux successifs et un dispositif formant trappe articulé le long du barreau, ledit barreau délimitant ainsi un côté du surécartement et étant situé en aval dudit surécartement considérant le sens d'avancement de ladite chaîne élévatrice, ledit dispositif formant trappe étant susceptible de venir obstruer au moins partiellement le surécartement le long des brins ascendants de la chaîne élévatrice assurant le transport, caractérisée en ce que le dispositif formant trappe est solidarisé avec un autre barreau de la chaîne élévatrice, ledit barreau étant voisin et en aval dudit barreau d'articulation considérant le sens d'avancement de la chaîne élévatrice, ledit dispositif formant trappe étant maintenu dans un plan constitué par ledit barreau de la chaîne élévatrice et son propre barreau d'articulation de manière à venir obstruer partiellement le surécartement pendant le parcours de la chaîne élévatrice le long des brins ascendants et descendants des parcours rectilignes de la chaîne élévatrice et à le dégager lors des changements de direction de la chaîne élévatrice dans un plan vertical.

Selon un mode de réalisation préférentiel, le dispositif formant trappe est constitué par deux flasques latéraux montés à rotation au niveau d'une de leurs extrémités sur ledit barreau d'articulation, flasques entre lesquels sont fixés au moins un barreau ou une plaque de manière à obstruer au moins partiellement le surécartement, ledit élément se prolongeant sur le côté opposé aux flasques par un élément de solidarisation avec le barreau situé en aval du barreau d'articulation.

Selon un mode de réalisation préférentiel l'élément de solidarisation est constitué par une fourche à deux dents fixée sur le dispositif formant trappe et s'étendant sur le côté opposé audit dispositif par rapport au barreau d'articulation de manière que les dents respectives passent de part et d'autre du barreau situé en aval du barreau d'articulation.

Selon un autre mode de réalisation, l'élément de solidarisation est constitué par un flasque fixé par une de ses extrémités sur le dispositif formant trappe et s'étendant sur le côté opposé dudit dispositif par rapport au barreau d'articulation, ledit flasque étant muni à son autre extrémité d'un élément tubulaire de section ovale dans lequel est inséré le barreau situé en aval du barreau d'articulation.

En fait, avec la construction ci-dessus, le dispositif formant trappe est maintenu dans le plan défini par le barreau sur lequel il est monté à rotation et par l'élément de chaîne, en particulier le barreau voisin. De plus, de par la forme de l'élément de solidarisation qui présente un certain jeu au niveau du barreau de fixation voisin, la chaîne élévatrice peut s'enrouler progressivement sans problème au niveau des roues motrices et des galets de renvoi.

Avec le dispositif décrit ci-dessus on obtient donc, au niveau des galets de renvoi inférieurs, un passage d'éjection pour le boudin de terre agglomérée et autres déchets. Toutefois, certains des déchets ont acquis, de par leur mouvement sur le brin inférieur, une vitesse de rotation inverse qui tend à les ramener vers l'amont par rapport à la génératrice inférieure du cylindre d'enroulement de la chaîne, de sorte que ces déchets peuvent se trouver au-delà du bord du surécartement au moment de l'ouverture de la trappe et de ce fait ne pas être éjectés. En conséquence, selon une autre caractéristique de la présente invention, elle comporte, en combinaison avec le dispositif formant trappe, un élément en saillie sur la surface intérieure de la chaîne élévatrice lequel est fixé sur le barreau de la chaîne élévatrice adjacent au surécartement et situé en amont, en considérant le sens d'avancement de la chaîne élévatrice, du dispositif formant trappe de manière à empêcher les déchets de rouler, avant l'ouverture de la trappe, au-delà de la surface du surécartement afin qu'ils tombent à travers le dégagement obtenu par l'écartement tangentiel du dispositif formant trappe au niveau des galets de renvoi inférieurs.

Selon un mode de réalisation, l'élément en saillie est réalisé par une palette fixée par au moins une patte de fixation sur les deux barreaux de la chaîne élévatrice adjacents au surécartement et situés en amont, en considérant le sens d'avancement de la chaîne élévatrice, du dispositif formant trappe de manière à être en saillie vers l'intérieur de la chaîne élévatrice. Il est évident pour l'homme de l'art que la palette peut, de manière avantageuse, être remplacée par des griffes ou des dispositifs similaires.

Dans la partie de la chaîne élévatrice qui assure le transport, partie qui est soutenue par des traverses inférieures, la palette frotte sur lesdites traverses supports, ce qui lui permet de jouer le rôle d'un élément nettoyeur qui élimine la terre et les feuilles qui se sont accumulées sur les traverses. De plus d'autres caractéristiques et avantages de la présente invention apparaîtront à la lecture de la description de différents modes de réalisation faite ci-après avec référence aux dessins ci-annexés dans lesquels :

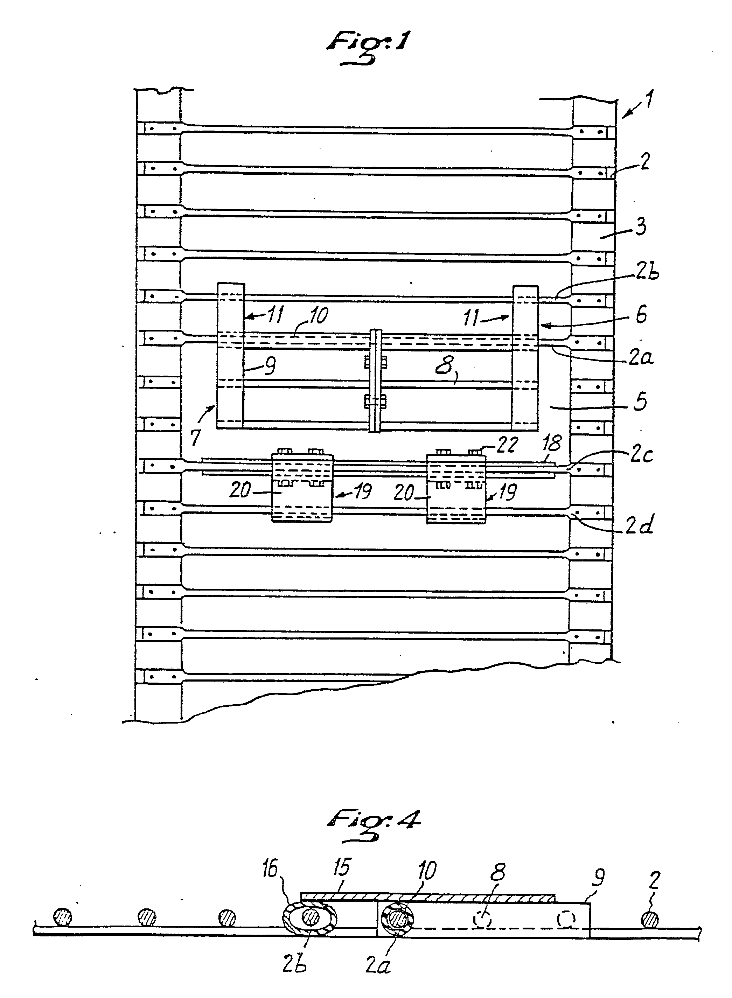

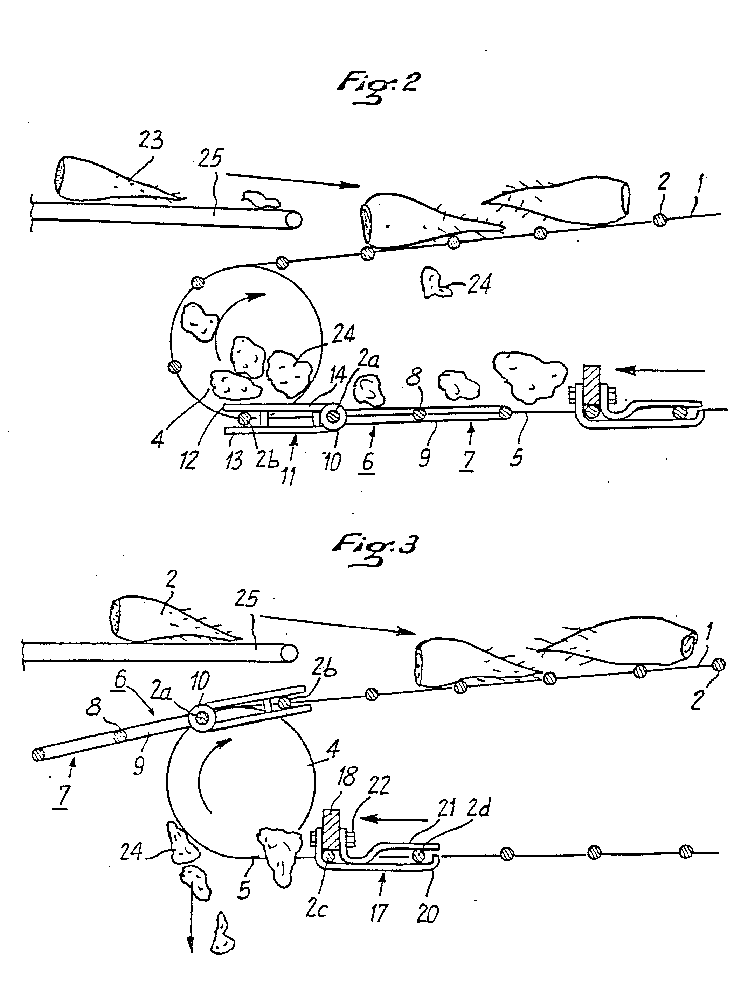

La figure 1 est une vue de dessus de la combinaison d'un dispositif formant trappe et d'un élément en saillie fixé sur une chaîne élévatrice conformément à la présente invention ; les figures 2 et 3 sont des vues schématiques en élévation latérale de la partie inférieure de la chaîne élévatrice d'une chargeuse munie des dispositifs de la figure 1, lesdits dispositifs se trouvant dans deux positions différentes près des galets de renvoi inférieurs et la figure 4 est une vue en élévation latérale d'un autre mode de réalisation d'un dispositif formant trappe.

Comme représenté sur les figures, la référence 1 désigne la chaîne élévatrice qui est constituée de manière connue par des barreaux 2 fixés par rivetage entre deux bandes sans fin 3 qui sont entraînées par des roues motrices et des galets de guidage et de renvoi inférieurs. En fait, dans un but de simplification des dessins, afin de ne représenter que la partie intéressante de la chaîne élévatrice, seuls les galets de renvoi inférieurs 4 ont été dessinés dans les figures 2 et 3. Conformément à l'invention, la chaîne élévatrice est munie sur sa longueur de surécartements 5. Les surécartements sont obtenus par suppression de deux barreaux 2 parallèles, ce qui donne comme expliqué ci-après une ouverture suffisamment large, dégagée pendant un temps suffisamment long pour permettre l'éjection du boudin de terre. Pour obstruer le surécartement pendant le parcours de la chaîne le long des brins rectilignes, un dispositif formant trappe 6 est monté sur la chaîne élévatrice 1, le long d'un côté du surécartement. Ce dispositif formant trappe comporte un élément formant trappe proprement dit 7 constitué par deux barreaux 8 montés perpendiculairement entre trois flasques 9, lesdits barreaux 8 étant positionnés entre les flasques 9 de manière à remplacer les barreaux de la chaîne élévatrice manquant lorsque le dispositif formant trappe se trouve dans le parcours de la chaîne le long des brins rectilignes. Une des extrémités de chaque flasque 9 est fixée sur un élément tubulaire 10 dans lequel est inséré le barreau 2a de la chaîne élévatrice se trouvant juste à côté du surécartement tandis que l'autre extrémité du flasque est libre. Comme représenté dans les figures 1 à 3, ledit élément 7 se prolonge sur le côté opposé aux flasques 9 par deux éléments de solidarisation 11 qui sont formés chacun par une fourche à deux dents 12, 13 dont le manche 14 qui prolonge une des dents 12 est fixé sur un des flasques latéraux 9 et dont les dents 12, 13 passent de chaque côté du barreau 2b adjacent au barreau 2a sur lequel est articulé l'élément 7.

La figure 4 représente un autre mode de réalisation de l'élément de solidarisation 11. Dans cette figure, l'élément formant trappe proprement dit est identique à l'élément 7 décrit ci-dessus. L'élément de solidarisation est constitué par deux flasques 15 qui prolongent, sur le côté opposé à l'élément formant trappe 7, les deux flasques latéraux. Ledit flasque est muni à son extrémité libre d'un élément tubulaire de section ovale 16 dans lequel est inséré le barreau 2b de la chaîne élévatrice adjacent au barreau 2a d'articulation de l'élément 7.

Pour faciliter l'éjection du boudin de terre, comme représenté dans les figures 1 à 3, on associe au dispositif formant trappe décrit ci-dessus, un élément 17 en saillie sur la surface intérieure de la chaîne élévatrice 1. Cet élément 17 est constitué d'une palette 18 fixée par deux pattes de fixation sur les deux barreaux 2c, 2d de la chaîne élévatrice adjacents au surécartement et opposés au barreau 2a. Chaque patte de fixation est constituée par une plaque en L 20 sur laquelle vient prendre appui une plaque sensiblement en S 21 de manière à former entre les deux plaques une partie tubulaire pour le passage du barreau 2d. La palette 18 est fixée par l'intermédiaire de boulons 22 entre les deux extrémités en saillie des deux plaques 20, 21.

On expliquera maintenant le fonctionnement du dispositif conforme à l'invention avec référence aux figures 2 et 3. Les figures 2 et 3 représentent la partie inférieure d'une chaîne élévatrice 1 positionnée en dessous des dents radiales 25 d'une turbine de groupage. Conformément à la présente invention, la chaîne élévatrice 1 qui comporte au moins un surécartement 5 est munie, au droit dudit surécartement, d'un dispositif 6 formant trappe 7 et d'un élément en saillie 18. Comme représenté dans les dessins, la turbine de groupage et de nettoyage projette sur la chaîne élévatrice, en même temps que les betteraves à charger 23, des mottes de terre 24. Si une partie des mottes de terre s'élimine naturellement en passant à travers les barreaux 2 de la chaîne élévatrice, une autre partie est entraînée sur le brin inférieur 1a de la chaîne élévatrice et vient s'agglomerer entre les galets de renvoi inférieurs 4 de manière à former un boudin de terre. Avec le dispositif formant trappe conforme à l'invention, l'élément formant trappe 7 est toujours maintenu dans le plan défini par le barreau d'articulation 2a et le barreau voisin 2b sur lequel est fixé l'élément de solidarisation 11. De ce fait comme représenté à la figure 2, l'élément formant trappe 7 obstrue le surécartement pendant les parcours rectilignes, mais, comme représenté à la figure 3, au niveau des galets de renvoi inférieurs, du fait de la courbe suivie par la chaîne élévatrice, l'élément formant trappe 7 s'écarte de la trajectoire de la chaîne élévatrice et dégage le surécartement de manière à projeter vers l'extérieur à travers le surécartement dégagé, le boudin de terre qui est entraîné entre les galets 4.

Toutefois avec uniquement le dispositif formant trappe ci-dessus, les déchets qui ont acquis, de par leur mouvement sur le brin inférieur, une vitesse de rotation inverse, sont ramenés vers l'amont par rapport à la génératrice inférieure du galet de renvoi 4 de la chaîne élévatrice et ne peuvent pas toujours être évacués à travers le surécartement. Aussi la palette en saillie 18 forme butée pour les déchets ci-dessus et les maintient au-dessus de l'élément formant trappe de façon à faciliter leur éjection. D'autre part, comme mentionné dans l'introduction, la palette en saillie ne sert pas uniquement de butée pour les mottes de terre mais sert aussi à nettoyer les traverses dans la partie de la chaîne élévatrice qui assure le transport.

## Revendications

1. Une chaîne transporteuse élévatrice (1) sans fin à barreaux comportant sur sa longueur au moins un surécartement (5) entre deux barreaux successifs (2a, 2c) et un dispositif (6) formant trappe (7) articulé le long du barreau (2a), ledit barreau (2a) délimitant ainsi un côté du surécartement (5) et étant situé en aval dudit surécartement (5) considérant le sens d'avancement de ladite chaîne élévatrice (1), ledit dispositif (6) formant trappe (7) étant susceptible de venir obstruer au moins partiellement le surécartement (5) le long des brins ascendants de la chaîne élévatrice (1) assurant le transport, caractérisée en ce que le dispositif (6) formant trappe (7) est solidarisé avec un autre barreau (2b) de la chaîne élévatrice (1), ledit barreau (2b) étant voisin et en aval dudit barreau (2a) d'articulation considérant le sens d'avancement de la chaîne élévatrice (1), ledit dispositif (6) formant trappe (7) étant maintenu dans un plan constitué par ledit barreau (2b) de la chaîne élévatrice (1) et son propre barreau (2a) d'articulation de manière à venir obstruer partiellement le surécartement (5) pendant le parcours de la chaîne élévatrice (1) le long des brins ascendants et descendants des parcours rectilignes de la chaîne élévatrice (1) et à le dégager lors des changements de direction de la chaîne élévatrice (1) dans un plan vertical.

2. Une chaîne transporteuse élévatrice sans fin à barreaux selon la revendication 1, caractérisée en ce que le dispositif (6) formant trappe (7) est constitué par deux flasques latéraux (9) montés à rotation au niveau d'une de leurs extrémités sur ledit barreau (2a) d'articulation, flasques entre lesquels sont fixés au moins un barreau (8) ou une plaque de manière à obstruer au moins partiellement le surécartement (5), ledit dispositif (6) formant trappe (7) se prolongeant sur le côté opposé aux flasques par un élément (11) de solidarisation avec le barreau (2b).

3. Une chaîne transporteuse élévatrice sans fin à barreaux selon la revendication 2, caractérisée en ce que l'élément (11) de solidarisation est constitué par une fourche à deux dents (12, 13) fixée sur le dispositif (6) formant trappe (7) et s'étendant sur le côté opposé audit dispositif (6) par rapport au barreau d'articulation (2a) de manière que les dents respectives (12, 13) passent de part et d'autre du barreau (2b).

4. Une chaîne transporteuse élévatrice sans fin à barreaux selon la revendication 2, caractérisée en ce que l'élément (11) de solidarisation est constitué par un flasque (15) fixé par une de ses extrémités sur le dispositif (6) formant trappe (7) et s'étendant sur le côté opposé dudit dispositif (6) par rapport au barreau d'articulation (2a), ledit flasque étant muni à son autre extrémité d'un élément tubulaire (16) de section ovale dans lequel est inséré le barreau (2b).

5. Une chaîne transporteuse élévatrice sans fin à barreaux selon l'une quelconque des revendications 1 à 4, caractérisée en ce qu'elle comporte, en combinaison avec le dispositif (6) formant trappe (7), un élément (17) en saillie sur la surface intérieure de la chaîne élévatrice lequel est fixé sur le barreau (2c) de la chaîne élévatrice adjacent au surécartement (5) et situé en amont, en considérant le sens d'avancement de la chaîne élévatrice (1), du dispositif (6) formant trappe (7) de manière à empêcher les déchets de rouler, avant l'ouverture de la trappe (7), au-delà de la surface du surécartement (5) afin qu'ils tombent à travers le dégagement obtenu par l'écartement tangentiel du dispositif (6) formant trappe (7) au niveau des galets de renvoi inférieurs.

6. Une chaîne transporteuse élévatrice sans fin à barreaux selon la revendication 5, caractérisée en ce que l'élément (17) en saillie est réalisé par une palette (18) fixée par au moins une patte de fixation (20, 21) sur les deux barreaux (2c, 2d) de la chaîne élévatrice adjacents au surécartement (5) et situés en amont en considérant le sens d'avancement de la chaîne élévatrice (1) du dispositif (6) formant trappe (7) de manière à être en saillie vers l'intérieur de la chaîne élévatrice (1).

**Claims**

1. An endless bar elevating conveyor chain (1), comprising over its length one overspacing (5) between two successive bars (2a, 2c) and a device (6) forming a trap (7) articulated along bar (2a), said bar (2a) thereby defining one side of the overspacing (5) and being located downstream of said overspacing (5) when looking in the direction of advancement of said elevating chain (1), said device (6) forming a trap (7) being likely to obstruct at least partly the overspacing (5) along the ascending runs of the elevating chain (1) providing the transportation, wherein the device (6) forming a trap (7) is rigidly connected to another bar (2b) of the elevating chain (1), said bar (2b) being adjacent and downstream of said articulation bar (2a) when looking in the direction of advancement of the elevating chain (1), said device (6) forming a trap (7) being maintained lying in a plane formed by said bar (2b) of the elevating chain (1) and its own articulation bar (2a) so as to obstruct in part the overspacing (1) during the passage of the elevating chain (1) along the ascending and descending runs of the rectilinear sections of the elevating chain (1) an to disengage it during the changes of direction of the elevating chain (1) in a vertical plane.

2. An endless bar elevating conveyor chain according to claim 1, wherein the device (6) forming a trap (7) is made of two side flanges (9) rotatably mounted at one of their ends on said articulation bar (2a), flanges between which are fixed at least one bar (8) or a plate so as to obstruct at least partly the overspacing (5), said device (6) forming a trap (7) being extended on the side opposite the flanges by an element (11) interlocking it with bar (2b).

3. An endless bar elevating conveyor chain according to claim 2, whrein the interlocking element (11) is made of a fork with two tines (12, 13) fixed on the device (6) forming a trap (7) and extending over the side opposite said device (6) with respect to the articulation bar (2a) so that the respective tines (12, 13) pass on either side of bar (2b).

4. An endless bar elevating conveyor chain according to claim 2, wherein the interlocking element (11) is made of a flange (15) fixed by one of its ends to the device (6) forming a trap (7) and extending over the side opposite said device (6) with respect to the articulation bar (2a), said flange being provided at its other end with a tubular element (16) of oval section in which is inserted bar (2b).

5. An endless bar elevating conveyor chain according to one of claims 1 to 4, characterized in that it includes, in combination with the device (6) forming a trap (7), an element (17) protruding over the inner surface of the elevating chain, which is fixed on bar (2c) of the elevating chain adjacent the overspacing (5) and situated upstream, when looking in the direction of advancement of the elevating chain (1), of the device (6) forming a trap (7) so as to prevent the rejects to roll, prior to the opening of trap (7), beyond the surface of the overspacing (5) so that they fall through the clearance provided by the tangential spacing of the device (6) forming a trap (7) at the level of the lower return rollers.

6. An endless bar elevating conveyor chain according to claim 5, wherein the protruding element (17) is provided by a pallet (18) fixed by at least one fixation lug (20, 21) on the two elevating chain bars (2c, 2d) adjacent the overspacing (5) and situated upstream, when looking in the direction of advancement of the elevating chain (1), of the device (6) forming a trap (7) so as to be protruding inwardly of the elevating chain (1).

**Patentansprüche**

1. Kettenförderer (1) mit wenigstens einem größeren Zwischenraum (5) zwischen zwei aufeinanderfolgenden Stäben (2a, 2c) und mit einer Vorrichtung (6), die eine Klappe (7) bildet, welche entlang des Stabes (2a) gelenkig angeordnet ist, wobei der Stab (2a) somit den Zwischenraum (5) an einer Seite begrenzt und in Förderrichtung des Kettenförderers hinter dem Zwischenraum (5) angeordnet ist, und wobei die Vorrichtung (6), die die Klappe (7) bildet, durch welche der Zwischenraum (5) wenigstens teilweise versperrbar ist längs der auflaufenden Trums des Kettenförderers (1), für den Transport sorgt, dadurch gekennzeichnet, daß die die Klappe (7) bildende Vorrichtung (6) mit einem anderen Stab (2b) des Kettenförderers (1) verbunden ist, der benachbart und in Förderrichtung des Kettenförderers hinter dem Gelenkstab (2a) angeordnet ist, daß die die Klappe (7) bildende Vorrichtung (6) in einer Ebene gehalten ist, die vom Stab (2b) des Kettenförderers (1) und dem zugeordneten Gelenkstab (2a) gebildet wird, derart, daß der Zwischenraum (5) während des Laufes des Kettenförderers (1) längs der auf- und ablaufenden Trums der geradlinigen Wege des Kettenförderers (1) teilweise versperrt wird und bei Richtungsänderung des Kettenförderers (1) in einer senkrechten Ebene freigegeben wird.

2. Kettenförderer nach Anspruch 1, dadurch gekennzeichnet, daß die die Klappe (7) bildende Vorrichtung (6) von zwei seitlichen Wänden (9) gebildet wird, die drehbar in Höhe einer ihrer Enden auf dem Gelenkstab (2a) angeordnet sind und dazwischen wenigstens an einem Stab (8) oder einer Platte befestigt sind, derart, daß der Zwischenraum (5) wenigstens teilweise versperrbar ist, wobei die die Klappe (7) bildende Vorrichtung (6) sich bis auf die zu den Wänden gegenüberliegende Seite erstreckt vermittels eines mit dem Stab (2b) verbundenen Elementes (11).

3. Kettenförderer nach Anspruch 2, dadurch gekennzeichnet, daß das Verbindungselement (11) durch eine mit zwei Zähnen (12, 13) versehene Gabel gebildet wird, die auf der die Klappe (7) bildenden Vorrichtung (6) angebracht ist und bis auf die der Vorrichtung (6) gegenüberliegende Seite im Vergleich zum Gelenkstab (2a) reicht, derart, daß die entsprechenden Zähne (12, 13) beiderseits am Stab (2b) vorbeigehen.

4. Kettenförderer nach Anspruch 2, dadurch gekennzeichnet, daß das Verbindungselement (11) durch ein Seitenstück (15) gebildet wird, das mit einem Ende auf der die Klappe (7) bildenden Vorrichtung (6) angebracht ist und sich bis auf die der Vorrichtung (6) gegenüberliegende Seite erstreckt hinsichtlich des Gelenkstabes (2a), wobei das Seitenstück an seinem anderen Ende mit einem ovalen Querschnitt aufweisenden ringförmigen Element (16) ausgestattet ist, in das der Stab (2b) eingeschoben ist.

5. Kettenförderer nach einem der Ansprüche 1 bis 4, dadurch gekennzeichnet, daß in Verbindung mit der die Klappe (7) bildenden Vorrichtung (6) ein mit einem Vorbau versehenes Element (17) auf der Innenfläche der Förderkette angeordnet ist, das auf dem Stab (2c) der Förderkette benachbart zum Zwischenraum (5) und in Förderrichtung des Kettenförderers (1) vor der die Klappe bildenden Vorrichtung (6) angeordnet ist, derart, daß ein Wegrollen der Abfälle verhindert wird vor dem Öffnen der Klappe (7) jenseits der Fläche des Zwischenraumes (5), damit sie quer durch den durch den tangentialen Spalt der die Klappe (7) bildenden Vorrichtung (6) erhaltenen Freiraum in Höhe der unteren Umlenkrollen fallen.

6. Kettenförderer nach Anspruch 5, dadurch gekennzeichnet, daß das Element (17) mit Vorbau durch eine Stapelplatte (18) gebildet wird, die durch wenigstens eine Befestigungsplatte (20, 21) auf den beiden Stäben (2c, 2d) der Förderkette benachbart zum Zwischenraum (5) angebracht ist und in Förderrichtung des Kettenförderers (1) vor der die Klappe (7) bildenden Vorrichtung (6) angeordnet ist, derart, daß sie gegen den Innenraum des Kettenförderers (1) vorspringt.

*Fig.1*

*Fig.4*

Fig. 2

Fig. 3